(19) Europäisches Patentamt
European Patent Office
Office européen des brevets

(11) EP 1 424 360 A1

(12) EUROPÄISCHE PATENTANMELDUNG

(43) Veröffentlichungstag:
**02.06.2004 Patentblatt 2004/23**

(51) Int Cl.[7]: **C08L 67/02**, C08L 77/02, C08L 101/00

(21) Anmeldenummer: **03026583.9**

(22) Anmeldetag: **19.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **26.11.2002 DE 10255044**

(71) Anmelder: **Bayer Aktiengesellschaft
51368 Leverkusen (DE)**

(72) Erfinder:
- **Braig, Thomas, Dr.
40476 Düsseldorf (DE)**
- **Joachimi, Detlev, Dr.
47800 Krefeld (DE)**
- **Persigehl, Peter, Dr.
40878 Ratingen (DE)**
- **van Mullekom, Robert, Dr.
5911 Al Venlo (NL)**

(54) **Hochfliessfähige Polymerzusammensetzungen mit verzweigten Fliesshilfsmitteln**

(57) Die Erfindung betrifft die Verwendung von terminal-polyfunktionellen polymeren Verbindungen, aus der Gruppe der Polyester, Polyglycerole oder Polyether zur Erniedrigung der Schmelzeviskosität in thermoplastischen Polykondensaten.

EP 1 424 360 A1

## Beschreibung

Die Erfindung betrifft die Verwendung von terminal-polyfunktionellen polymeren Verbindungen, aus der Gruppe der Polyester, Polyglycerole oder Polyether zur Erniedrigung der Schmelzeviskosität in thermoplastischen Polykondensaten.

Hochfließfähige, niederviskose thermoplastische Zusammensetzungen sind für eine Vielzahl von Spritzgussanwendungen interessant. Beispielsweise erfordern Dünnwandbauteile in der Elektro-, Elektronik- und Kfz-Industrie niedrige Viskositäten der Thermoplastzusammensetzung, damit ein Füllen der Form bei möglichst geringen Fülldrükken bzw. Schließkräften der entsprechenden Spritzgießmaschinen möglich ist. Dies trifft auch auf das gleichzeitige Füllen von mehreren Spritzgussbauteilen über ein gemeinsames Angusssystem in sogenannten Vielfachwerkzeugen zu. Des Weiteren können häufig mit niederviskosen thermoplastische Zusammensetzungen auch kürzere Zykluszeiten realisiert werden. Darüber hinaus sind gute Fließfähigkeiten gerade auch bei hochgefüllten thermoplastischen Zusammensetzungen beispielsweise mit Glasfaser- und/oder Mineralgehaltengehalten von über 40 % sehr wichtig.

Trotz hoher Fließfähigkeit werden jedoch hohe mechanische Anforderungen an die Bauteile gestellt, so dass durch die Viskositätserniedrigung keine Beeinträchtigung der mechanischen Eigenschaften verursacht werden darf.

Es gibt mehrere Möglichkeiten hochfließfähige, niederviskose thermoplastische Formmassen zu realisieren.

Eine Möglichkeit ist der Einsatz von niederviskosen Polymerharzen mit geringerem Molekulargewicht als Basispolymere für die thermoplastischen Formmassen. Der Einsatz niedermolekularer Polymerharze ist aber häufig mit Einbußen bei den mechanischen Eigenschaften, insbesondere der Zähigkeit, verbunden. Außerdem erfordert die Herstellung eines niederviskosen Polymerharzes auf einer bestehenden Polymerisationsanlage oftmals aufwendige und mit Investitionen verbundene Eingriffe.

Eine andere Möglichkeit ist der Einsatz von sogenannten Fließhilfsmitteln, auch als Fließmittel, Fließhilfen oder innere Gleitmittel bezeichnet, die dem Polymerharz als Additiv zugegeben werden können.

Derartige Fließhilfsmittel sind in der Literatur wie z.B. in Kunststoffe **2000**, 9, S. 116-118 bekannt und können beispielsweise Fettsäureester von Polyolen oder Amide aus Fettsäuren und Aminen sein. Derartige Fettsäureester, wie beispielsweise Pentaerithritoltetrastearat oder Ethylenglykoldimontanoat, sind jedoch mit polaren Thermoplasten wie Polyamiden, Polyalkylenterephthalaten oder Polycarbonaten nur begrenzt mischbar und reichern sich daher an der Formteiloberfläche an und werden deshalb auch als Entformungshilfsmittel eingesetzt. Sie können allerdings besonders bei höheren Konzentrationen bei Wärmelagerungen aus diesen Formteilen an die Oberfläche migrieren und sich dort anreichern. Dies kann beispielsweise zu Problemen hinsichtlich Lack- oder Metallhaftung bei beschichteten Formteilen führen.

Alternativ zu den oberflächenaktiven Fließhilfsmitteln können interne Fließhilfsmittel eingesetzt werden, die mit den Polymerharzen verträglich sind. Hierfür eignen sich beispielsweise niedermolekulare Verbindungen oder verzweigte, hochverzweigte oder dendritische Polymere mit einer dem Polymerharz ähnlichen Polarität. Derartige hochverzweigte oder dendritische Systeme sind literaturbekannt und können beispielsweise auf verzweigten Polyestern, Polyamiden, Polyesteramiden, Polyethern oder Polyaminen basieren, wie sie *Kunststoffe* **2001,** 91, S. 179-190, oder in *Advances in Polymer Science* **1999**, 143 (Branched Polymers II), S. 1-34 beschrieben sind.

Blends aus linearen Thermoplasten mit hochverzweigten, auf Aromaten basierenden Verbindungen sind ebenfalls in der Literatur beschrieben, wie beispielsweise in *Macromolecules* **1995**, 28, S. 3214-3220 oder Huber et al. (Konferenz EUROMAT 99, Biannual Meeting of the Federation of European Materials Societies (FEMS), Munich, Germany, Sept. 27-30, 1999 (2000), Meeting Date 1999, 13 303-308. Publisher: Wiley-VCH Verlag GmbH, Weinheim, Germany). Der Masseanteil der hochverzweigten Verbindungen lag bei den Blends jedoch bei 25 Gew.-% und mehr und führte zu erheblichen Einbußen bei mechanischen Eigenschaften. Angaben zur Viskosität werden nicht gemacht.

EP-A 0 682 057 beschreibt den Einsatz des stickstoffhaltigen 4-Kaskadendendrimers der ersten Generation: 1,4-Diaominobutan[4]propylamin (N,N'-tetrabis(3-aminopropyl)-1,4-butandiamin $DAB(PA)_4$ zur Erniedrigung der Viskosität in Polyamid 6, Polyamid 6,6 und Polybutylenterephthalat. Während beim Einsatz von $DAB(PA)_4$ zur Viskositätserniedrigung in Polyamiden die Schlagzähigkeit der erhaltenen Frommassen praktisch unbeeinflusst bleibt (Unterschied < 5 %), nimmt die Schlagzähigkeit bei PBT um mehr als 15 % ab.

WO-A 9506081 beschreibt den Einsatz von dreidimensionalen verzweigten Polymeren mit starren aromatischen Einheiten in Blends mit Polyamid zur Erhöhung der Materialsteifigkeit und der Reißfestigkeit bei gleichzeitiger Reduktion der Viskosität und der Reißdehnung der Blends.

WO-A 97/45474 beschreibt den Einsatz von hochverzweigten Polyestermakromolekülen in Blends mit reaktiven Polymeren. Diese Polymerzusammensetzungen zeichnen sich ebenfalls durch eine höhere Steifigkeit und Reißfestigkeit bei niedrigerer Viskosität aus.

EP-A 0 994 157 beschreibt den Einsatz von hochverzeigten, auf Aromaten basierenden Polymeren, die bei der Caprolactam-Polykondensation zugesetzt und damit mit einpolymerisiert werden. Dabei zeigen Zusammensetzungen aus Polyamiden, bei denen hochverzweigte Polymere einpolymerisiert wurden, bessere mechanische Eigenschaften und bessere Fließfähigkeiten als Vergleichszusammensetzungen ohne die hochverzweigten Komponenten.

Beschrieben wird die Zugabe der hochverzweigten Polymere während der Polymerisation, nicht aber die Zugabe zu einer Polymerschmelze.

Die Aufgabe bestand darin, eine Erniedrigung der Viskosität von Polykondensatzusammensetzungen durch Additivierung der Polymerschmelze zu erreichen, ohne dabei Verluste bei den mechanischen Eigenschaften wie Zähigkeit in Kauf nehmen zu müssen, wie dies beim Einsatz niederviskoser linearer Polymerharze oder bei literaturbekannten Additiven auftritt. Bezüglich Steifigkeit und Reißfestigkeit sollten sich die Zusammensetzungen möglichst nicht signifikant von den nicht additivierten Polykondensatzusammensetzungen unterscheiden, damit ein problemloser Austausch der Materialien für Kunststoffkonstuktionen ermöglicht wird.

Es wurde nun überraschend gefunden, dass durch die Verwendung von terminal-polyfunktionellen polymeren Verbindungen in Schmelzen aus Thermoplasten, die bevorzugt Polyalkylenterephthalate und Polyamide umfassen, die Schmelzeviskosität der Zusammensetzungen stark erniedrigt und die mechanischen Eigenschaften von Formteilen aus diesen Zusammensetzungen wie Zähigkeit nur geringstfügig beeinträchtigt wird. Die mechanischen Eigenschaften der Zusammensetzungen wie beispielsweise Zähigkeit übertreffen die mechanischen Eigenschaften, die durch den Einsatz eines entsprechend niederviskosen Polymerharzes erreicht werden können.

Gegenstand der Erfindung ist daher die Verwendung von mindestens einer terminal-polyfunktionellen polymeren Verbindung B, aus der Gruppe der Polyester, Polyglycerole oder Polyether oder bevorzugt hochverzweigter, dentritischer Polyester, Polyglycerole oder Polyether in thermoplastischen Polykondensaten zur Erniedrigung der Schmelzeviskosität.

Weiterer Gegenstand ist die erfindungsgemäße Verwendung der Komponente B in Form von Zusammensetzungen, enthaltend

A) 99,9 bis 10, bevorzugt 99,5 bis 40, bevorzugter 99,0 bis 55 Gew.-Teile mindestens eines thermoplastischen Polykondensates,

B) 0,1 bis 10, vorzugsweise 0,25 bis 6, besonders bevorzugt 0,5 bis 4 Gew.-Teile mindestens einer terminal-polyfunktionellen polymeren Verbindung, aus der Gruppe der Polyester; Polyglycerole oder Polyether, bevorzugt hochverzweigter, dentritischer Polyester, Polyglycerole oder Polyether, die auf nicht aromatischen Monomeren im Kern der Verbindung und optional beliebigen funktionellen Gruppen bzw. Substituenten als terminierende Gruppen bzw. als äußerste Schale basieren,

C) 0 bis 70 Gew.-Teile, vorzugsweise 5 bis 40 Gew.-Teile, besonders bevorzugt 9 bis 37 Gew.-Teile mindestens eines Füll- und Verstärkungsstoffen,

D) 0 bis 30 Gew.-Teile, vorzugsweise 5 bis 25 Gew.-Teile, besonders bevorzugt 9 bis 19 Gew.-Teile mindestens eines Flammschutzadditivs,

E) 0 bis 80 Gew.-Teile, besonders bevorzugt 2 bis 19 Gew.-Teile, am meisten bevorzugt 9 bis 15 Gew.-Teile mindestens eines Elastomermodifikators,

F) 0 bis 10 Gew.-%, bevorzugt 0,05 bis 3 Gew.-%, besonders bevorzugt 0,1 bis 0,9 Gew.-% weiterer üblicher Additive,

zur Erniedrigung der Schmelzeviskosität von Mischung A, B, C, D, E, F.

Als **Komponente A** enthalten die Zusammensetzungen bevorzugt mindestens ein thermoplastisches Polykondensat wie beispielsweise Polyoxymethylenpolymerisate, Polyimide, Polyetherketone, Polycarbonat, Polyamide, Polyester, thermoplastische Polyurethane. Bevorzugt enthalten die Zusammensetzungen als Komponente A mindestens ein Polykondensat aus der Gruppe der Polycarbonate, Polyamide wie beispielsweise Polyamid 6 oder Polyamid 6,6, Polyester wie beispielsweise Polyalkylenterephthalate, z.B. Polybutylenterephthalat oder Polyethylenterephthalat. Erfindungsgemäß können bevorzugt auch eine Mischung aus zwei oder mehreren Polykondensaten als Komponente A eingesetzt werden. Besonders bevorzugt sind Mischungen die Polycarbonat, Polyamide und Polyester umfassen, wie beispielsweise Polycarbonat/Polybutylenterephthalat-Blends, Polybutylenterephthalat/Polyethylenterephthalat-Blends, Polycarbonat/Polyethylenterephthalat-Blends oder Polyamid/Polyalkylenterephthalat-Blends,

Sehr bevorzugt werden als Komponente A **Polyamide** eingesetzt. Die erfindungsgemäßen Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden. Geeignet sind auch Blends mit Anteilen von anderen Polymeren z.B. von Polyethylen, Polypropylen, ABS, wobei ggf. ein oder mehrere

Kompatibilisatoren eingesetzt werden können. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt ε-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Die erfindungsgemäß hergestellten Polyamide können auch im Gemisch mit anderen Polyamiden und/oder weiteren Polymeren eingesetzt werden.

Den Polyamiden können übliche Additive wie z.B. Entformungsmittel, Stabilisatoren und/oder Fließhilfsmittel in der Schmelze zugemischt oder auf der Oberfläche aufgebracht werden.

Ebenfalls bevorzugt können als Komponente A teilaromatische Polyester eingesetzt werden. Die erfindungsgemäßen teilaromatischen Polyester sind ausgewählt aus der Gruppe Derivate der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalat und Polyethylenterephthalat, ganz besonders bevorzugt des Polybutylenterephthalats.

Unter teilaromatischen Polyestern versteht man Materialien, die neben aromatischen Molekülteilen auch aliphatische Molekülteile enthalten

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 mol-%, bezogen auf die Dicarbonsäure, Terephthalsäurereste und mindestens 80, vorzugsweise mindestens 90 mol-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,3 $cm^3/g$ bis 1,5 $cm^3/g$, vorzugsweise 0,4 $cm^3/g$ bis 1,3 $cm^3/g$, besonders bevorzugt 0,5 bis 1,0 jeweils gemessen in Phenol/o-Dichlorbenzol (1:1 Gew.-Teile) bei 25°C.

Die erfindungsgemäß hergestellten Polyester können auch im Gemisch mit anderen Polyestern und/oder weiteren Polymeren eingesetzt werden.

Den Polyestern können übliche Additive wie z.B. Entformungsmittel, Stabilisatoren und/oder Fließhilfsmittel in der Schmelze zugemischt oder auf der Oberfläche aufgebracht werden.

Ebenfalls bevorzugt können als Komponente A erfindungsgemäß **Polycarbonate** oder eine Mischung von Polycarbonaten eingesetzt werden.

Bevorzugte Polycarbonate sind solche Homopolycarbonate und Copolycarbonate auf Basis der Bisphenole der allgemeinen Formel (I),

$$HO\text{-}Z\text{-}OH \qquad (I)$$

worin

Z ein divalenter organischen Rest mit 6 bis 30 C-Atomen ist, der eine oder mehrere aromatische Gruppen enthält.

Bevorzugt sind Bisphenole der Formel (Ia)

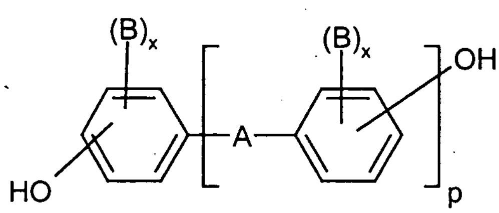

(Ia),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können;
oder ein Rest der Formel (II) oder (III)

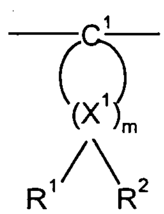

(II)

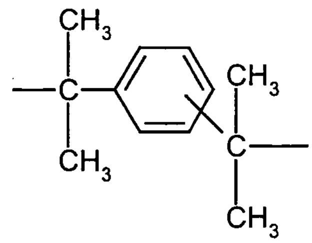

(III)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^1$ und $R^2$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einen Atom $X^1$, $R^1$ und $R^2$ gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4-hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1, 1 -Bis-(4-hydroxyphenyl)- 1 -phenylethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964.

1,1-Bis-(4-hydroxyphenyl)-3,3,5-trimethylcyclohexan und seine Herstellung ist z.B. beschrieben in US-A 4 982 014.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Die erfindungsgemäß geeigneten Polycarbonate haben bevorzugt ein Gewichtsmittel der molaren Masse ($\overline{M}_w$), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen, wie beispielsweise 1,1,1-Tris-(4-hydroxyphenyl)-ethan und 3,3-Bis-(3-methyl-4-hydroxyphenyl)-2-oxo-2,3-dihydroindol. Die Menge der gegebenenfalls einzusetzenden Verzweiger beträgt bevorzugt 0,05 mol-% bis 2 mol-%, bezogen auf Mole an eingesetzten Bisphenolen.

Den Polycarbonaten könne übliche Additive wie z.B. Entformungsmittel, Stabilisatoren und/oder Fließhilfsmittel in der Schmelze zugemischt oder auf der Oberfläche aufgebracht werden. Bevorzugt enthalten die verwendeten Polycarbonate bereits Entformungsmittel wie beispielsweise Pentaerithritoltetrastearat vor Compoundierung mit den anderen Komponenten der erfindungsgemäßen Formmassen.

Als Komponente A können erfindungsgemäß ausdrücklich auch Kombinationen aus verschiedenen Thermoplasten eingesetzt werden wie beispielsweise bevorzugt PC/Polyalkylenterephthalat, PC/PBT, PC/PET, PBT/PA, PET/PA, PBT/PS, PET/PS, PA/PS. Besonders bevorzugt sind die Mischungen PC/Polyalkylenterephthalat wie PC/PBT und PC/PET. Am meisten bevorzugt sind Mischungen aus PC/Polyalkylenterephthalat wie PC/PBT und PC/PET bei denen das Gewichts-Verhältnis PC:Polyalkylenterephthalat im Bereich 3:1 bis 1:3, bevorzugt im Bereich 1:1 bis 1:2,5 liegt.

Als Komponente B, die erfindungsgemäß zur Absenkung der Schmelzeviskosität verwendet wird, enthalten die Zusammensetzungen mindestens eine terminalpolyfunktionelle polymere Verbindung, die als Heteroatom Sauerstoff umfasst, aus der Gruppe der Polyester, Polyglycerole oder Polyether, bevorzugt aus der Gruppe hochverzweigter, dendritischer Polyester, Polyglycerole oder Polyether, die auf nicht aromatischen Monomeren im Kern der Verbindung und optional beliebigen funktionellen Gruppen bzw. Substituenten als Terminatoren bzw. als äußerste Schale basiert.

Terminal-polyfunktionelle polymere Verbindungen haben bevorzugt mindestens drei, äußerst bevorzugt mindestens fünf und besonders bevorzugt mindestens acht funktionelle Gruppen oder Substituenten als terminale Gruppen besitzen.

Die terminale-Polyfunktionalität der polymeren Verbindung kann beispielsweise durch Einsatz einer verzweigten Struktur oder durch Einsatz von Monomeren mit mindesten drei funktionellen Gruppen entstehen. Erfindungsgemäße funktionelle Gruppen oder Substituenten sind beispielsweise Hydroxyl-, Carboxyl-, Epoxy-, Benzyl-, Benzoyl-, Phenyl-, Benzoyloxy-, Phenylester-, Benzoesäureester-, Sulfonsäureester-, primäre oder sekundäre Amino-, Isocyanat-, Amid-, gesättigte oder ungesättigte Fettsäureestergruppen. Bevorzugt werden als funktionelle Gruppe oder Substituent oder beispielsweise Hydroxyl-, Carboxyl-, Epoxy-, Benzyl-, Benzoyl-, Phenyl-, Benzoyloxy-, Phenylester- und Benzoesäureester-Gruppen eingesetzt.

In einer weiteren besonders bevorzugten Ausführung wird als Komponente B ein lineares und/oder verzweigtes Glycerin-Oligomer oder ein Gemisch aus linearen und verzweigten Glycerin-Oligomeren verwemdet. Die Herstellung derartiger linearer und/oder verzweigter Glycerin-Oligomerer oder Mischungen aus linearen und verzweigten Glycerin-Oligomeren erfolgt beispielsweise über die dem Fachmann bekannte Hochtemperaturpolymerisation von Glycerin, oder Verfahren wie sie z. B. beschrieben sind in den Patentschriften US-A 2,520,670, wobei man Glycerin unter basischen Bedingungen mit α-Monochlorohydrin umsetzt, DE-A 3 900 059, wobei man α-Monochlorohydrin mit Epichlorhydrin in Gegenwart von Säuren oder sauer reagierenden Verbindungen umsetzt und anschließend das Reaktionsgemisch mit einen alkalisch reagierenden Medium behandelt, oder DE-A 4 132 171, wobei man Isopropylidenglycerin mit α-Monochlorohydrin umsetzt in Gegenwart einer alkalischen Verbindung, und das Produkt anschließend behandelt mit wässriger Säure.

Bevorzugt ist ein Gemisch aus linearen und verzweigten Glycerin-Oligomeren mit folgender Zusammensetzung (Angaben in g/kg):

| | |
|---|---|
| Glycerin | 0 bis 150 |
| Diglycerin | 1 bis 999 |
| Triglycerin | 1 bis 999 |
| Tetraglycerin | 1 bis 600 |
| Pentaglycerin | 0 bis 300 |
| Hexaglycerin u. höhere Oligomeren | 0 bis 100 |

Besonders bevorzugt ist ein Gemisch aus linearen und verzweigten Glycerin-Oligomeren mit folgender Zusammensetzung (Angaben in g/kg):

| | |
|---|---|
| Glycerin | 0 bis 100 |
| Diglycerin | 150 bis 300 |
| Triglycerin | 350 bis 550 |
| Tetraglycerin | 100 bis 250 |
| Pentaglycerin | 0 bis 100 |
| Hexaglycerin u. höhere Oligomeren | 0 bis 50 |

Die Hydroxylgruppen der linearen und verzweigten Glycerin-Oligomeren im Gemisch können durch bekannte Reaktionen z. B. verestert, verethert, aminiert, alkyliert urethanisiert, halogeniert, sulfoniert, sulfatiert und oxidiert werden.

Die erfindungsgemäß verwendeten linearen und/oder verzweigten Glycerin-Oligomeren, oder Gemische aus linearen und verzweigten Glycerin-Oligomeren können beispielsweise unter den Produktbezeichnungen Diglycerol, Triglycerol, Polyglycerol-3 und Polyglycerol-4 der Fa. Solvay / Belgien bezogen werden.

Bevorzugt können als Komponente B auch hochverzweigte und/oder dendritische polymere Verbindungen eingesetzt werden. Hochverzweigte dendritische polymere Verbindungen inklusive Dendrimerer können generell als dreidimensionale stark verzweigte Moleküle beschrieben werden, die eine bauinartige Struktur haben. Dendrimere sind hochsymmetrisch, während sogenannte hochverzweigte Makromoleküle unsymmetrisch sein können, jedoch die hochverzweigte baumartige Struktur aufrecht erhalten. Dendrimere können als monodisperse oder nahezu monodisperse hochverzweigte dendritische Makromoleküle angesehen werden. Hochverzweigte dendritische Makromoleküle bestehen normalerweise aus einem Initiator oder einem Kern mit mindestens einer reaktiven Stelle oder funktionellen Gruppe und mehreren Verzweigungsschichten und optional einer oder mehreren Verlängerungs-/Spacerschicht und/ oder einer Schicht von Kettenterminatoren. Kontinuierliche Wiederholung der Verzweigungsschichten führt normalerweise zu einer erhöhten Verzweigungsmultiplizität und, wo erwünscht oder benötigt, einer erhöhten Anzahl von terminalen funktionellen Gruppen. Die Schichten werden gewöhnlich Generationen genannt und die Verzweigungen Dendrone. Hochverzweigte dendritische Makromoleküle oder Dendrimiere können beispielsweise von den vereinfachten Formeln (IV), (V), (IV) veranschaulicht werden,

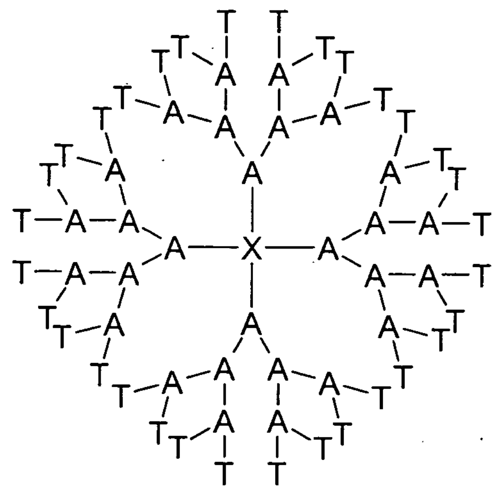

(IV),

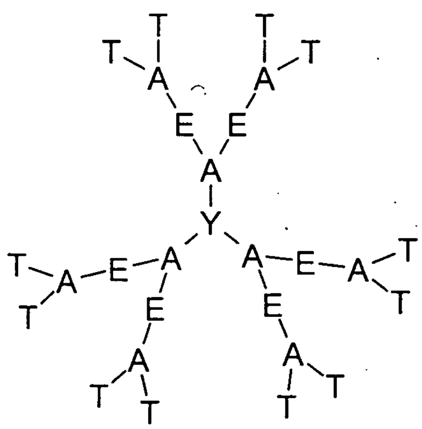

(V),

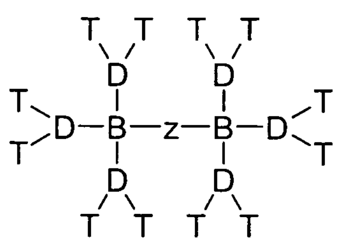

(VI)

wobei

X, Y und Z Initiatoren oder Kerne darstellen mit vier, drei oder zwei reaktiven Funktionen,

A, B und D Kettenverzweigungs-Monomere mit drei (A und D) oder vier (B) reaktiven funktionellen Gruppen darstellen, wobei jede Schicht aus Kettenverzweigem eine Verzweigungsgeneration im Makromolekül darstellt,

E optional Verlängerungs- oder Spacermonomere mit zwei funktionellen Gruppen und

T optional ein terminierender Kettenabbrecher und/oder eine terminale funktionelle Gruppe und/oder ein terminaler Substituent oder eine Mischung daraus wie beispielsweise Hydroxyl-, Carboxyl-, Epoxy-, Benzyl-, Benzoyl-, Phenyl-, Benzoyloxy-, Phenylester-Gruppen ist.

Die hochverzweigten dendritischen Makromoleküle der Formeln (IV), (V) und (VI) enthalten vier, drei bzw. zwei identische sogenannte Dendrone, die mit dem jeweiligem Kern verbunden sind.
Die Formel (VII) zeigt vereinfacht ein Dendron des Markomoleküls der Formel (IV).

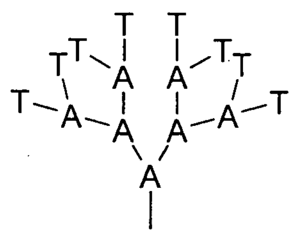

(VII)

Ein Dendron kann beispielsweise vorsynthetisiert werden und anschließend an einen Kern gekoppelt werden. Alternativ können von einem Kern ausgehend die Dendrone durch Polymerisationsreaktionen aufgebaut werden.
In einer besonders bevorzugten Ausführung wird ein hochverzweigter dendritscher Polyester eingesetzt wie in WO-A 93/17060 beschrieben. In der besonders bevorzugten Ausführung besteht das hochverzweigte dendritische Makromolekül aus einem zentralen Initiatormolekül oder einem Initiatorpolymer mit mindestens einer reaktiven funktionellen Gruppe A1, wobei die funktionellen Gruppen A1 unter Bildung einer initialen Baumstruktur mit reaktiven funktionellen Gruppen B1 eines monomeren Kettenverzweigers, der beide funktionelle Gruppen A1 und B1 enthält, reagieren. Die initiale Baumstruktur kann in einer bevorzugten Ausführung optional ausgedehnt und weiter verzweigt werden, indem weitere Moleküle des monomeren Kettenverzweigers durch Bindungsbildung zwischen funktionellen Gruppen A1 und B1 angebunden werden. Die Baumstruktur kann optional auch durch Reaktion mit Kettenterminatoren weiter ausgedehnt werden.
Das hochverzweigte Makromolekül ist dadurch charakterisiert, dass es sich bei den reaktiven funktionellen Gruppen A1 um Carboxyl- oder Carboxylalkylgruppen und bei den funktionellen Gruppen B1 um Hydroxyl- oder Hydroxyalkylgruppen handelt oder dass es sich bei den reaktiven funktionellen Gruppen A1 um Hydroxyl- oder Hydroxyalkylgruppen und bei den funktionellen Gruppen B1 um Carboxyl- oder Carboxylalkylgruppen handelt, sowie dass der monomere Kettenverzweiger mindestens eine funktionelle Gruppe B1 und mindestens zwei funktionelle Gruppen A1 enthält.
In einer besonders bevorzugten Ausführung handelt es sich bei den reaktiven funktionellen Gruppen A1 um Hydroxyl- oder Hydroxyalkylgruppen und bei den funktionellen Gruppen B1 um Carboxyl- oder Carboxylalkylgruppen.
Das zentrale Inititiatormolekül oder Initiatorpolymer kann beispielsweise aus

a) einem aliphatischem, cycloaliphatischen oder einem aromatischen Diol,
b) einem aliphatischem, cycloaliphatischen oder einem aromatischen Triol,
c) einem aliphatischem, cycloaliphatischen oder einem aromatischen Tetraol,
d) einem Zuckeralkohol wie z.B. Sorbitol oder Mannitol,
e) einem Anhydroennea-Heptitol oder Dipentaerithritol,
f) einem $\alpha$-Alkylglucosid wie z.B. $\alpha$-Methylglucosid,
g) einem monofunktionellem Alkohol,
h) einem multifunkionellen Alkohol mit mindestens 5 Hydroxylgruppen oder
i) einem Alkoxylatpolymer mit einem Molekulargewicht von höchstens 800 g/mol, das in einer Reaktion aus Alkylenoxid oder einem Alkylenoxidderivat und einem oder mehreren Hydroxylgruppen tragenden Alkohol aus der Aufzählung a) bis h)

bestehen.
Die unter a) beschriebenen Alkohole können auf verschiedenen Typen basieren. Sie können beispielsweise

linear sein gemäß der Formel

$$HO(CH_2)_nOH$$ bei der n=2-18 ist.

Diole dieses Typs sind beispielsweise 1,2-Ethandiol, 1,4-Butandiol, 1,5-Pentandiol, 1,6-Hexandiol und Polytetrahydrofuran. Die Diole können auch verzweigt sein wie beispielsweise Dimethylolpropan, Neopentylglycol, 2-Propyl-2-Methyl-1,3-propandiol, 2-Butyl-2-ethyl-1,3-propandiol, 2,2-Diethyl-1,3-propandiol, 1,2-Propandiol, 1,3-Butandiol, 2,2,4-Trimethylpentan-1,3-diol, Trimethylhexan-1,6-diol, 2-Methyl-1,3-propandiol, Diethylenglycol, Triethylenglycol, Polyethylenglycole, Dipropylenglycol, Tripropylenglycol und Polypropylenglycol. Cycloaliphatische Diols wie z.B. Cyclohexandimethanol und cyclische Formen des Pentaerythritols wie beispielsweise 1,3-Dioxane-5,5-dimethanol können ebenfalls eingesetzt werden. Aromatische Diole, zum Beispiel 1,4-Xylylenglycol und 1-Phenyl-1,2-ethandiol, Reaktionsprodukte von polyfunktionellen phenolischen Verbindungen und Alkylenoxide oder Derivate davon können ebenfalls eingesetzt werden, wie z.B. Bisphenol A, Hydroquinone und Resorcinol. Auf Estern basierende Diole wie z. B. Neopentylhydroxypivalat sind ebenfalls einsetzbar.

Als Ersatz für ein 1,2-Diol können auch entsprechende 1,2-Epoxide oder α-Olefinoxide verwendet werden.

Generell können 1,2-Epoxide mit der Formel

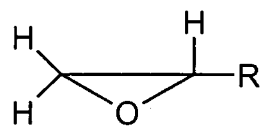

beschrieben werden wobei R beispielsweise für H, $CH_3$, Alkyl mit der Summenformel $C_nH_{2n+1}$ mit $n \geq 2$ oder Phenyl steht. Ethylenoxid, Propylenoxide, 1,2-Butylenoxid und Styroloxid sind Beispiele für derartige Verbindungen.

Die unter b) erwähnten Triole können, ebenso wie die Diole, verschiedenartigen Typs sein und können beispielsweise mit der nachfolgenden Formel beschrieben werden,

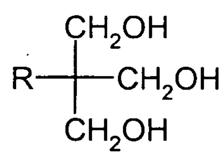

wobei R beispielsweise für $C_nH_{2n+1}$ mit $n \geq 24$. R kann dabei ein linearer oder verzweigter Alkylrest sein. Trimethylolpropane, Trimethylolethan, Trimethylolbutan, 3,5,5-Trimethyl-2,2-dihydroxymethylhexan-1-ol sind Beispiele für derartige Triole. Weitere Beispiele für einsetzbare Triole haben zwei Arten von Hydroxylgruppen, wie beispielsweise primäre und sekundäre Gruppen wie beispielsweise Glycerol und 1,2,6-Hexanetriol. Ebenfalls können cycloaliphatische und aromatische Triole und/oder entsprechende Addukte mit Alkylenoxiden oder Derivaten davon eingesetzt werden.

Die unter c) beschriebene Tetraole können beispielsweise Pentaerythritol, Ditrimethylolpropanol, Diglycerol, und Ditrimethylolethane sein, ebenso wie cycloaliphatische und aromatische Tetraole sowie die entsprechenden Addukte mit Alkylenoxiden oder Derivate davon.

Erfindungsgemäße Kettenverzweiger bestehen beispielsweise aus

a) einer monofunktionellen Carbonsäure mit wenigstens zwei Hydroxylgruppen,
b) einer monofunktionellen Carbonsäure mit wenigstens zwei Hydroxylgruppen, wobei eine oder mehrere Hydroxylgruppen hydroxyalkylsubstituiert sind.

Die erfindungsgemäßen Kettenverzweiger können bevorzugt sein α,α-Bis(hydroxymethyl)-propionsäure (Dimethylolpropionsäure), α,α-Bis-(hydroxymethyl)-butansäure, α,α-Tris(hydroxymethyl)essigsäure, α,α-Bis(hydroxymethyl)-valeriansäure, α,α-Bis(hydroxy)-propionsäure oder α-Phenylcarbonsäure mit wenigstens zwei Hydroxylgruppen, die direkt am Phenylring angebunden sind (phenolische Hydroxylgruppen) wie beispielsweise 3,5-Dihydroxybenzoesäure.

Erfindungsgemäße Säuren, bei denen ein oder mehrere Hydroxylgruppen durch Hydroxyalkylgruppen substituiert sind, können ebenfalls bevorzugt als Kettenverzweiger eingesetzt werden.

Hochverzweigte dendritische Makromoleküle können in bestimmten Fällen erfindungsgemäß auch Kettenabbrecher enthalten, die bevorzugt ausgewählt werden aus einer oder folgenden Verbindungen

a) eine gesättigte monofunktionelle Carbonsäure oder eine gesättigte Fettsäure oder ein entsprechendes Anhydrid,
b) eine ungesättigte Fettsäure,
c) eine ungesättigte monofunktionelle Carbonsäure,
d) ein Diisocyanat oder eine Oligomer davon
e) ein Addukt aus einem Reaktionsprodukt mit einer Verbindung der Gruppe d),
f) eine difunkionell oder eine polyfunkionale Carbonsäure oder Anhydrid davon,
g) ein Addukt eines Reaktionsprodukts mit einer Verbindung der Gruppe f),
h) eine aromatische monofuktionelle Carbonsäure wie beispielsweise Benzoesäure und para-*tert.*Butylbenzoesäure;
i) ein Epihalohydrin wie beispielsweise 1-Chloro-2,3-epoxypropan und 1,4-Dichloro-2,3-epoxybutan,
j) ein Glycidylester einer monofunktionellen Carbonsäure einer Fettsäure, wobei die Säure 1-24 Kohlenstoffatome enthält,
k) ein Epoxid einer ungesättigten Fettsäure mit 3-24 Kohlenstoffatomen wie beispielsweise epoxidierte Sojafettsäuren.

Die terminalen Hydroxylgruppen in der Kette der Makromolekülen in der Kette der Makromolekülen können natürlich zu einem größeren oder kleineren Anteil mit einem Kettenabbrecher abreagiert sein.

Ein Kettenabbrecher entsprechend a) enthält beispielsweise eine gesättigte monofunktionelle Carbonsäure oder eine Fettsäure und wird mit der allgemeinen Formel

$$R\text{-}COOH$$

wobei R beispielsweise $C_nH_{2n+1}$ mit $n \leq 32$ ist. Die Carbon- oder Fettsäuren können linear oder verzweigt und können als Säure oder, falls möglich, als Anhydrid eingesetzt werden. Beispiele für diese Säuren a) sind Essigsäure, Propionsäure, Butansäure, Valeriansäure, Isobutansäure Trimethylessigsäure, Capronsäure Heptansäure, Capricsäure, Peargonsäure, Lauronsäure, Myristinsäure, Palmitinsäure, Stearinsäure, Behensäure, Lignocerinsäure, Ceratinsäure, Montansäure, Isostearinsäure, Isononansäure, und 2-Ethylhexansäure.

Kettenabbrecher der Gruppe b) können beispielsweise eine ungesättigte Fettsäure wie beispielsweise Ölsäure, Ricinolsäure, Linolsäure, Linolensäure, Erucasäure, Sojabohnenfettsäure, Leinölfettsäure, dehydrierte Recinoleinsäure, Tallölfettsäure, Sonnenblumenölfettsäure und Saflorölfettsäure.

Eine ungesättigte monofunktionelle Carbonsäure entsprechend c) kann erfindungsgemäß ebenfalls als Kettenstopper eingesetzt werden. Beispiele dafür sind Acrylsäure oder Methacrylsäure.

Kettenstopper entsprechend d) basieren auf dem Einsatz von Diisocyanaten und Oligomeren davon. Entsprechende Verbindungen sind beispielsweise Toluol-2,4-diisocyanat, Toluol-2,6-diisocyanat, Diphenylmethandiisocyanat, Hexamethylendiisocyanat, Isophorondiisocyanat, 4,4-Diisocyanat-dicyclohexylmethane,: 1,5-Diisocyanatnaphthalin, 1,4-Phenylendiisocyanat, Tetramethylxylol, Diisocyanat, 1-Isocyanato-3,3,5-trimethyl-5-isocyanatmethylcyclohexan, 1,4-Diisocyanatcyclohexane, 1,3-Diisocyanatbenzol und 1,4-Diisocyanatbenzol.

Addukte, die aus Reaktionsprodukten entsprechend Verbindungen d) hergestellt wurden, können außerdem als Kettenabbrecher entsprechend e) eingesetzt werden. Ensprechende Kettenabbrechen sind beispielsweise Addukte mit Hydroxyethylacrylat, Hydroxypropylacrylat, Trimethylolpropandiacrylate, Pentaerythritoldiacrylat, Pentaerythritoltriacrylat und entsprechende Acrylate von alkoxylierten Trimethylolpropanen bzw. Pentaerythritol. Weitere Beispiele sind Addukte mit hydroxysubstituierten Allylethern wie beispielsweise Trimethylolpropandiallylether und Pentaerythritoltriallylether.

Polyfunktionelle Carbonsäuren und/oder entsprechende Anhydride entsprechend f) sind ebenfalls als Kettenabbrecher einsetzbar. Dazu gehören beispielsweise Maleinsäureanhydrid, Fumarsäureanhydrid, Orthophthalsäureanhydrid, Terephthalsäure, Isophthalsäure, Adipinsäure, Azelainsäure, Sebacinsäure, Tetrahydrophthalsäureanhydrid, Hexahydrophthalsäureanhydrid, Bernsteinsäure und Trimellithsäureanhydrid.

Addukte gemäß g), die aus den Reaktionsprodukten entsprechend f) hergestellt wurden, können erfindungsgemäß ebenfalls als Kettenabbrecher eingesetzt werden. Dies sind beispielsweise Addukte von hydroxysubstituierten Allylethern wie Addukte von Trimethylolpropanmonoallylether, Trimethylolpropandiallylether, Pentaerythritoltriallylether und Glycerolmonoallylether.

Epihalohydrine entsprechend i) können ebenfalls als Kettenabbrecher eingesetzt werden und zur epoxyfunktionalisierten dendritischen Makromolekülen führen.

Ein Glycidylester einer monofunktionellen Carbonsäure oder einer Fettsäure, die 1-24 Kohlenstoffatome besitzt kann entsprechend j) ebenfalls als Kettenabbrecher eingesetzt werden. Derartige Verbindungen sind beispielsweise 1,2-Epoxy-3-allyloxypropan, 1-Allyloxy-2,3-epoxypropan, 1,2-Epoxy-3-phenoxypropan und 1-Glycidyloxy-2-ethylhexan.

Epoxyfunktionalisierte Dendrimere können auch durch Epoxidierung einer ungesättigten Bindung hergestellt werden, die in das terminierte Dendrimer eingebaut ist wie beispielsweise eine ungesättigte Fettsäure. Es ist auch möglich Addukte derartig epoxidierter Verbindungen wie beispielsweise Glycidylether von Bisphenol A und entsprechenden Oligomeren einzusetzten.

Erfindungsgemäße dendritische Polyestermakromolküle der Komponente B) können beispielsweise wie in WO-A 93/17060 beschrieben hergestellt werden. Dabei wird ein Initiatormolekül oder ein Initiatorpolymer mit mindestens einer Hydroxylgruppe bei einer Temperatur von 0-300°C, bevorzugt 50-280°C, besonders bevorzugt 100-250°C, mit einem Kettenverzweiger mit einer Carbonsäuregruppe und mindestens zwei Hydroxylgruppen oder hydroxyalkylsubstitutierte Gruppen, wobei beispielsweise Wasser oder ein entsprechendes Abspaltprodukt der Polykondensation wie beispielsweise ein niedermolekularer Alkohol kontinuierlich nach üblichen Methoden abgetrennt wird. Optional kann das erhaltene Reaktionsprodukt mit einem Kettenabbrecher umgesetzt werden.

Das molare Verhältnis zwischen der Stoffmenge an Kettenverzweiger und den Hydroxygruppen des Initiators liegt erfindungsgemäß zwischen 1:1 und 2000:1, vorzugsweise zwischen 1:1 und 1100:1, besonders bevorzugt zwischen 1:1 und 500:1, und am meisten bevorzugt zwischen 1:1 und 100:1.

Die Reaktion kann ohne oder mit Anwesenheit eines Katalysators durchgeführt werden. Erfindungsgemäß können Veresterungskatalysatoren wie beispielsweise eine Bronstedtsäure (z.B. Naphthylsulphonsäure, para-Toluolsulphonsäure, Methansulphonsäure, Trifluoromethansulphonsäure, Trifluoressigsäure, Schwefelsäure oder Phosphorsäure), eine Lewissäure (z.B. $BF_3$, $AlCl_3$, $SnCl_4$), ein Titanate (z.B. Tetrabutyltitanat), Zinkpulver oder eine Organozinkverbindung, Zinnpulver oder eine Organozinnverbindung eingesetzt werden.

Der initiierende Schritt wird bevorzugt in Gegenwart eines sauren Katalysators ausgeführt. Das dabei erhaltene Produkt kann gegebenenfalls vor der weiteren Reaktion mit einem Kettenabbrecher neutralisiert, isoliert oder gereinigt werden.

Im bevorzugten Fall werden die Initiatormoleküle der Erfindung ausgewählt aus der Gruppe von Ditrimethylolpropan, Ditrimethylolethan, Dipentaerythritol, Pentaerythritol, alkoxyliertes Pentaerythritol, Trimethylolethan, Trimethylolpropan, alkoxyliertes Trimethylolpropan, Glycerol, Neopentylglycol, Dimethylolpropan oder 1,3-Dioxane-5,5-dimethanol. Besonders bevorzugt wird der Initiator aus der Gruppe gewählt von Ditrimethylolpropan, Trimethylolpropan, ethoxyliertem Pentaerythritol, Pentaerythritol oder Glycerol.

Die Kettenverzweiger werden erfindungsgemäß bevorzugt ausgewählt aus der Gruppe von Dimethylolpropionsäure, α,α-Bis(hydroxymethyl)propionsäure, α,α-Bis(hydroxymethyl)buttersäure, α,α,α-Tris(hydroxymethyl)-essigsäure, α,α-Bis(hydroxymethyl)-valeriansäure, α,α-Bis(hydroxy)-propionsäure oder 3,5-Dihydroxybenzoesäure. Besonders bevorzugt wird als Kettenverzweiger Dimethylolpropionsäure beziehungsweise α,α-Bis(hydroxymethyl)propionsäure eingesetzt.

Erfindungsgemäße hochverzweigte Polyestermakromoleküle haben ein Molekulargewicht im Bereich von 100 g/mol bis 50000 g/mol, bevorzugt im Bereich von 500 g/mol bis 10000 g/mol und besonders bevorzugt im Bereich von 1000 g/mol bis 5000 g/mol.

Erfindungsgemäße hochverzweigte Polyestermakromoleküle können beispielsweise unter der Versuchsproduktbezeichnung Boltorn der Fa. Perstorp/Schweden bezogen werden.

In einer weiteren besonders bevorzugten Ausführung wird ein definiert aufgebautes, hochverzweigtes Polyol auf Glycidolbasis eingesetzt, wie in DE 199 47 631 A1 beschrieben. Hierbei wird das hochverzweigte Makromolekül aufgebaut aus einer wasserstoffaktiven Starterverbindung, zu der unter basischer Katalyse eine Lösung, die Glycidol in verdünnter Form enthält, gegeben wird, wobei das zur Monomerverdünnung eingesetzte Lösungsmittel kontinuierlich abdestilliert wird.

Als wasserstoffaktive Starterverbindungen werden Verbindungen mit Molekulargewichten von 18 bis 4,000 und 1 bis 20 Hydroxyl-, Thiol- und/oder Aminogruppen verwendet. Beispielhaft seien genannt Methanol, Ethanol, Butanol, Phenol, Ethylenglykol, Diethylenglykol, Triethylenglykol, Polyethylenglykol, 1,2-Propylenglykol, Dipropylenglykol, Polypropylenglykol, 1,4-Butandiol, Hexamethylenglykol, Bisphenol A, Trimethylolpropan, Glyzerin, Pentaerythrit, Sorbit, Rohrzucker, abgebaute Stärke, Wasser, Methylamin, Ethylamin, Propylamin, Butylamin, Stearylamin, Anilin, Benzylamin, o- und p-Toluidin, α,β-Naphtylamin, Ammoniak, Ethylendiamin, Propylendiamin, 1,4-Butylendiamin, 1,2-, 1,3-, 1,4-, 1,5- oder 1,6-Hexamethylendiamin, wie o-, m- und p-Phenylendiamin, 2,4-, 2,6-Toluylendiamin, 2,2'-, 2,4- und 4,4'-Diaminodiphenylmethan und Diethylendiamin. Die Starterverbindung wird zunächst durch ein geeignetes Reagenz partiell deprotoniert, z.B. durch Alkalioder Erdalkalimetalle, deren Hydride, Alkoxide, Hydroxide oder Alkyle. Bevorzugt werden Alkali- oder Erdalkalimetallhydroxide oder -alkoxide eingesetzt, wie z.B. Kaliumhydroxid oder -methoxid. Dabei entstehen gegebenenfalls reaktive, flüchtige Reaktionsprodukte (z.B. Wasser, Alkohol) werden entfernt

(z.B. durch Destillation). Deprotonierungsgrade liegen üblicherweise bei 0,1 % bis 90 % und vorzugsweise bei 5 % bis 20 %. Um Durchmischungsprobleme im Lauf der Reaktion zu vermeiden, wird das so bereitete basische Initiatorsystem, vorzugsweise unter Inertgas (z.B. $N_2$, Ar), in einem inerten Lösungsmittel I (0,1 - 90 Gew.-%, bezogen auf die Menge des Endprodukts) mit einer Siedetemperatur mindestens 5°C oberhalb der Reaktionstemperatur gelöst bzw: dispergiert. Lösungsmittel I kann ein aliphatischer, cycloaliphatischer oder aromatischer Kohlenwasserstoff (z.B. Decalin, Toluol, Xylol) oder ein Ether (z.B. Glyme, Diglyme, Triglyme), vorzugsweise Diglyme, sowie Gemische aus diesen sein. Das Monomer wird in einer Lösung zugegeben, die üblicherweise 80 bis 0,1 Gew.-% und vorzugsweise 50 bis 1 Gew.-% Glycidol in einem inerten Lösungsmittel II enthält. Lösungsmittel II kann ein aliphatischer, cycloaliphatischer oder aromatischer Kohlenwasserstoff (z.B. Hexan, Cyclohexän, Benzol) oder ein Ether (z.B. Diethylether, THF), vorzugsweise THF, oder ein Gemisch aus diesen sein, wobei die Siedetemperatur mindestens 1°C unterhalb der Reaktionstemperatur liegt. Lösungsmittel II muss ein Lösungsmittel fiir Glycidol sein, aber nicht notwendigerweise für das Polyol. Die Monomerlösung wird, vorzugsweise unter Inertgas (z.B. $N_2$, Ar), langsam zur Mischung aus Initiator und Lösungsmittel I zudosiert. Die Dosiergeschwindigkeit wird so gewählt, dass bei den gegebenen Reaktionsbedingungen von Reaktionstemperatur, Glycidolkonzentration, Hydroxylund Katalysatorkonzentration eine gute Temperaturkontrolle gewährleistet wird. Während des Reaktionsverlaufs wird Lösungsmittel II kontinuierlich aus der Reaktionsmischung abdestilliert. Die Reaktionstemperaturen betragen dabei üblicherweise 40°C bis 180°C, vorzugsweise 80°C bis 140°C. Die Reaktion wird vorzugsweise unter Normaldruck oder reduziertem Druck durchgerührt.

Die so dargestellten Polyole besitzen Polymerisationsgrade (bezogen auf ein aktives Wasserstoffatom des Initiators) von 1 bis 300, vorzugsweise von 5 bis 80. Die Molmasse kann dem anionischen Verfahren entsprechend durch das Monomer/ Initiator-Verhältnis gesteuert werden. Die Polydispersitäten sind kleiner als 1,7 und vorzugsweise kleiner als 1,5.

Erfindungsgemäß können die Verbindungen der Komponente B) auch durch gezielte Umsetzungen der funktionellen Gruppen Derivatisierungen vorgenommen werden. Die Hydroxylgruppen können beispielsweise durch an sich bekannte Reaktionen mit geeigneten Reaktionspartnern z.B. verestert, verethert, aminiert, alkyliert urethanisiert, halogeniert, sulfoniert, sulfatiert und oxidiert werden.

Die erfindungsgemäßen hochverzweigten Polyole können beispielsweise unter der Produktbezeichnung Hyperbranched Polyglycerols der Fa. Hyperpolymers / Deutschland bezogen werden.

## Komponente C

Als Komponente C) enthalten die thermoplastischen Formmassen einen Füllstoff oder Verstärkungsstoff oder eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden erfindungsgemäß mineralische teilchenförmige Füllstoffe auf der Basis von Talk, Wollastonit, Kaolin und/oder Glasfasern.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk, Wollastonit oder Kaolin.

Im Falle, dass Komponente F) ein Blockcopolymer ist, enthalten die Blends den mineralischen Füllstoff bevorzugt in einer Menge von 2,5 bis 34, besonders bevorzugt in einer Menge von 3,5 bis 28, am meisten bevorzugt in einer Menge von 5 bis 21 Gew.-%.

Besonders bevorzugt sind auch nadelförmige mineralische Füllstoffe. Unter nadelförmigen mineralischen Füllstoffen wird erfindungsgemäß ein mineralischer Füllstoff mit stark ausgeprägtem nadelförmigen Charakter verstanden. Als Beispiel seien nadelförmige Wollastonite genannt. Bevorzugt weist das Mineral ein Länge : Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 $\mu$m, besonders bevorzugt bei kleiner 15 $\mu$m, insbesondere bevorzugt bei kleiner 10 $\mu$m, am meisten bevorzugt bei kleiner 5 $\mu$m, bestimmt mit einem CILAS GRANULOMETER.

Besonders bevorzugt als Komponente E) werden auch mineralische Füllstoffe auf der Basis von Talk. Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, infrage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-

% bezogen auf die Gesamtmasse an Füllstoff aufweisen.

Die mineralischen Füllstoffe auf Basis von Talk können auch oberflächenbehandelt sein. Sie können beispielsweise mit einem Haftvermittlersystem z.B. auf Silanbasis ausgerüstet sein.

Die erfindungsgemäßen mineralischen Füllstoffe auf Basis von Talk haben bevorzugt eine obere Teilchen- bzw. Korngröße d97 kleiner 50 µm, bevorzugt kleiner 10, besonders bevorzugt kleiner 6 und insbesondere bevorzugt kleiner 2,5 µm. Als mittlere Korngröße d50 wird bevorzugt ein Wert kleiner 10, bevorzugt kleiner 6, besonders bevorzugt kleiner 2 und insbesondere bevorzugt kleiner 1 µm gewählt. Die d97-und d50-Werte von den Füllstoffen D werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe auf Basis von Talk liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Anzahl (ca. 50) von Füllstoffpartikeln.

Der Füllstoff-und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Besonders bevorzugt sind erfindungsgemäß auch Glasfasern, die im allgemeinen einen Faserdurchmesser zwischen 7 und 18, bevorzugt zwischen 9 und 15 µm haben, und als Endlosfasern oder als geschnittene oder gemahlene Glasfasern zugesetzt werden können, wobei die Fasern mit einem geeigneten Schlichtesystem und einem Haftvermittler bzw. Haftvermittlersystem z.B. auf Silanbasis ausgerüstet sein können.

Gebräuchliche Silanverbindungen zur Vorbehandlung haben beispielsweise die allgemeine Formel

(X-(CH2)q)k-Si-(O-CrH2r+1)4-k

in der die Substituenten folgende Bedeutung haben:

x $NH_2$-, HO-,

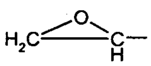 ,

q eine ganze Zahl von 2 bis 10, bevorzugt 3 bis 4
r eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis, vorzugsweise 0,25 bis 1,5 und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97-bzw. d50-Wert aufweisen als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt auf.

Die Teilchendurchmesser am fertigen Produkt können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden.

## Komponente D

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 geeignet, z.B. Triphenylphosphat (TPP), Resorcinol-bis-(diphenylphosphat) einschließlich Oligomere (RDP) sowie Bisphenol-A-bis-dipheriylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und Tetrafluorethylenpolymerisate können zugesetzt werden.

<u>**Komponente E**</u>

Die Komponente E umfasst ein oder mehrere Pfropfpolymerisate von

E.1 5 bis 95, vorzugsweise 30 bis 90 Gew.-%, wenigstens eines Vinylmonomeren auf

E.2 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage E.2 hat im allgemeinen eine mittlere Teilchengröße ($d_{50}$-Wert) von 0,05 bis 10 µm, vorzugsweise 0,1 bis 5 µm, besonders bevorzugt 0,2 bis 1 µm.

Monomere E.1 sind vorzugsweise Gemische aus

E.1.1 50 bis 99 Gew.-% Vinylaromaten und/oder kemsubstituierten Vinylaromaten (wie beispielsweise Styrol, α-Methylstyrol, p-Methylstyrol, p-Chlorstyrol) und/oder Methacrylsäure-($C_1$-$C_8$)-Alkylester (wie z.B. Methylmethacrylat, Ethylmethacrylat) und

E.1.2 1 bis 50 Gew.-% Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid und Methylmethacrylat.

Besonders bevorzugte Monomere sind E.1.1 Styrol und E. 1.2 Acrylnitril.

Für die Pfropfpolymerisate E geeignete Pfropfgrundlagen E.2 sind beispielsweise Dienkautschuke, EP(D) M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen E.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente E.2 unterhalb <10°C, vorzugsweise <0°C, besonders bevorzugt <-10°C liegt.

Besonders bevorzugt ist reiner Polybutadienkautschuk.

Besonders bevorzugte Polymerisate E sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage E.2 beträgt mindestens 30 Gew.-%, vorzugsweise mindestens 40 Gew.-% (in Toluol gemessen).

Die Pfropfcopolymerisate E werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfinonomere in Gegenwart der Pfropfgrundlage gewonnen werden und bei der Aufarbeitung mit anfallen.

Geeignete Acrylatkautschuke gemäß E.2 der Polymerisate E sind vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkyl-

ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind z. B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Weitere geeignete Pfropgrundlagen gemäß E.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage E.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen: Er kann mittels Ultrazentrifugenmessung (W. Scholtan, H. Lange, Kolloid, Z. und Z. Polymere 250 (1972), 782-1796) bestimmt werden.

## Komponente F

Die Komponente F stellen Additive dar. Übliche Additive sind z.B. Stabilisatoren (zum Beispiel UV-Stabilisatoren, Thermostabilisatoren, Gammastrahlenstabilisatoren), Antistatika, Fließhilfsmittel, Entformungsmittel, Brandschutzadditive, Emulgatoren, Nukleirungsmittel, Weichmacher, Gleitmittel, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren können zum Beispiel sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Pigmente können z.B. Titandioxid, Ultramarinblau, Eisenoxid, Ruß, Phthalocyanine, Chinacridone, Perylene, Nigrosin und Anthrachinone eingesetzt werden.

Als Nukleierungsmittel können z.B. Natrium- oder Calciumphenylphosphinat, Aluminiumoxid, Siliziumdioxid sowie bevorzugt Talkum eingesetzt werden.

Als Gleit- und Entformungsmittel können z.B. Esterwachse, Pentaeritrytoltetrastearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Die erfindungsgemäße Verwendung der erfindungsgemäßen Zusammensetzungen erfolgt nach an sich bekannten Verfahren durch Mischen der Komponenten. Das Mischen der Komponenten erfolgt durch Vermischen der Komponenten in den entsprechenden Gewichtsanteilen. Vorzugsweise geschieht das Mischen der Komponenten bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Gegenstand der Erfindung sind ferner die erfindungsgemäße Verwendung zur Herstellung von Formkörpern. Die erfindungsgemäß hergestellten Formmassen zeichnen sich dadurch aus, dass sie eine höhere Schlagzähigkeit besitzen als Formmassen vergleichbarer Viskosität, die durch Einsatz eines niederviskosen Basisharzes als Komponente A) hergestellt wurden. Bei unverstärkten, nicht elastomermodifizierten Thermoplastenzusammensetzungen wird

durch Zusatz der Komponente B) die Viskosität um 5 bis 60 %, bevorzugt um 10 bis 50 %, besonders bevorzugt um 20 bis 40 % reduziert. Bei verstärkten und/oder elastomermodifizierten Zusammensetzung kann die Erniedrigung der Viskosität geringer ausfallen.

Erfindungsgemäß hergestellte Formmassen können nach üblichen Verfahren, beispielsweise durch Spritzguss oder Extrusion, zu Formteilen oder Halbzeugen verarbeitet werden. Beispiele für Halbzeuge sind Folien und Platten. Besonders bevorzugt ist die Spritzgießverarbeitung.

Die durch die erfindungsgemäße Verwendung hergestellten Formteile können kleinoder großteilig sein und beispielsweise für Kfz-, Elektro-, Elektronik-, Telekommunikations-, Informationstechnologie-, Computer-, Haushalts-, Sport-, Medizin- oder Unterhaltungsanwendungen eingesetzt werden. Insbesondere können erfindungsgemäße Formmassen für Anwendungen eingesetzt werden, für die eine hohe. Schmelzefließfähigkeit erforderlich ist. Ein Beispiel für derartige Anwendungen ist die sogenannte Dünnwandtechnologie, bei der die Formteile Wanddicken von weniger als 2,5 mm, bevorzugt weniger als 2,0 mm, besonders bevorzugt weniger als 1,5 mm und am meisten bevorzugt weniger als 1,0 mm aufweisen. Ein weiteres Beispiele sind sogenannte Multiwerkzeuge, bei denen über ein Angusssystem mindestens 4 Formteile, bevorzugt mindestens 8 Formteile, besonders bevorzugt mindestens 12 Formteile, am meisten bevorzugt mindestens 16 Formteile in einem Spritzgussvorgang gefüllt werden.

**<u>Beispiele:</u>**

**Komponente A1**: Lineares Polybutylenterephthalat (Pocan B 1300, Handelsprodukt der Bayer AG, Leverkusen, Deutschland) mit einer Intrinsischen Viskosität von ca. 0,93 $cm^3/g$ (gemessen in Phenol : 1,2-Dichlorbenzol = 1: 1 bei 25°C)

**Komponente A2:** Lineares Polybutylenterephthalat mit einer Intrinsischen Viskosität von ca. 0, 81 $cm^3/g$ (gemessen in Phenol : 1,2-Dichlorbenzol = 1:1 bei 25°C)

**Komponente A3:** Lineares Polybutylenterephthalat mit einer Intrinsischen Viskosität von ca. 0, 70 $cm^3/g$ (gemessen in Phenol : 1,2-Dichlorbenzol = 1:1 bei 25°C)

**Komponente A4:** Lineares Polyamid 6 (B29, Handelsprodukt der Bayer aG, Leverkusen, Deutschland) der relativen Lösungsviskosität von 2,9 (gemessen in m-Kresol bei 25°C)

**Komponente A5:** Lineares Polyamid 6 der relativen Lösungsviskosität von 2,6 (gemessen in m-Kresol bei 25°C)

**Komponente A6:** Lineares Polyamid 6 der relativen Lösungsviskosität von 2,2 (gemessen in m-Kresol bei 25°C)

**Komponente B1:** Hochverzweigter aliphatischer Polyester nach CA: 150504-00-0 auf Basis von Ditrimethylolpropan und $\alpha,\alpha$-Bis(hydroxymethyl)propionsäure mit einem Molekulargewicht von 1747 g/mol (Boltorn H 20, Versuchsprodukt der Perstorp AB, Perstorp, Schweden).

Komponente B2: Hochverzweigter aliphatischer Polyester nach CA: 150504-00-0 auf Basis von Ditrimethylolpropan und $\alpha,\alpha$-Bis(hydroxymethyl)propionsäure mit einem Molekulargewicht von 3604 g/mol (Boltorn H 30, Versuchsprodukt der Perstorp AB, Perstorp, Schweden).

Komponente B3: Polygycerol-3 (Handelssprodukt der Solvay AG, Belgien), das sich aus
150-300 g/kg Diglycerin
350-550 g/kg Triglycerin
100-250 g/kg Tetraglycerin
max 100 g/kg Pentaglycerin und
max 50 g/kg Hexaglycerin und höhere Oligomere zusammensetzt.

**Komponente C1:** Mit silanhaltigen Verbindungen beschlichtete Glasfaser mit einem Durchmesser von 10 µm (CS 7967, Handelprodukt der Bayer Antwerpen N.V., Antwerpen, Belgien)

**Komponente C2:** Mit silanhaltigen Verbindungen beschlichtete Glasfaser mit einem Durchmesser von 11 µm (CS 7928, Handelprodukt der Bayer Antwerpen N.V., Antwerpen, Belgien)

Als Additive wurden übliche Nukleierungsmittel und Entformungsmittel verwendet.

Zusammensetzungen auf Basis von PBT der Beispiele in den Tabellen 1 und 2 und auf Basis von PA der Beispiele in den Tabellen 3 und 4 wurden auf einem Zweiwellenextruder des Typs ZSK32 (Werner und Pfleiderer) bei Massetemperaturen von 260 bis 300°C zu Formmassen compoundiert, die Schmelze wurde in ein Wasserbad ausgetragen und anschließend granuliert.

Die Prüfkörper Zusammensetzungen auf Basis von PBT der Beispiele in den Tabellen 1 und 2 wurden auf einer Spritzgießmaschine des Typs Arburg 320-210-500 bei einer Massetemperatur von ca. 260°C und einer Werkzeugtemperatur von ca. 80°C zu Schulterstäben (3 mm Dicke gemäß ISO 527) und Prüfstäben 80x10x4 mm (gem. ISO 178) verspritzt.

Die Prüfkörper Zusammensetzungen auf Basis von Polyamid der Beispiele in den Tabellen 3 und 4 wurden auf einer Spritzgießmaschine des Typs Arburg 320-210-500 bei einer Massetemperatur von ca. 280°C und einer Werkzeugtemperatur von ca. 80°C zu Schulterstäben (3 mm Dicke gemäß ISO 527) und Prüfstäben 80x10x4 mm (gem. ISO 178) verspritzt.

Bis auf die MVR- und Schmelzeviskositätsmessungen wurden alle in den folgenden Tabellen aufgeführten Untersuchungen an o.g. Prüfkörpern durchgeführt.

Zugmodul: Steifigkeit nach DIN / EN / ISO 527-2/1A.

Reißdehnung: Dehnbarkeit bestimmt nach DIN/EN/ISO 527-2/1A.

Biegemodul: Steifigkeit nach ISO 178

Randfaserdehnung: Randfaserdehnung bei Biegefestigkeit nach ISO 178

MVR: Fließfähigkeit nach DIN/ISO 1133 bei 260°C und 2,16 kg nach Trocknung des Granulates bei 120°C für 4 Stunden im Vakuumtrockner.

Schmelzeviskosität: Bestimmt nach DIN 54811 / ISO 11443 bei 260°C und einer Scherrate von $1000s^{-1}$ (Tabelle 1, 2, 3, 5) bzw. von $1500s^{-1}$ (Tabelle 4) mit dem Gerät Viscorobo 94.00 der Fa. Göttfert nach Trocknung des Granulates bei 120°C für 4 Stunden im Vakuumtrockner.

An den Beispielen der Tabelle 1 ist zu erkennen, dass die Viskosität durch Zusatz der Komponente B1) (Bsp. 1, Bsp. 2) bzw. der Komponente B3) (Bsp.3) im Vergleich zu dem Vergleichsbeispiel Vgl. 1 stark erniedrigt werden kann. Die Viskosität der Bsp. 1 bis 2 konnte auf das Niveau von Vgl.2 auf Basis des niederviskosen PBTs oder sogar noch darüber hinaus (Bsp.3) erniedrigt werden, dabei zeigten Bsp. 1-3 jedoch eine höhere Schlagzähigkeit und auch höhere Reißdehnung als Vgl.2. Analog verhalten sich Bsp. 4 und 5 im Vergleich mit Vergleichbeispiels Vgl.4 (Tabelle 2), Bsp. 6 und 7 im Vergleich mit Vergleichbeispiels Vgl.6 (Tabelle 3), und Bsp. 8 und 10 im Vergleich mit Vergleichbeispiels Vgl.8 (Tabelle 4). Auch Bsp. 10 im Vergleich mit Vergleichbeispiels Vgl.10 (Tabelle 5) zeigt dies in Bezug auf die Schlagzähigkeit, die Reißdehnung wurde hier aber nicht bestimmt.

Tabelle 1

| | | Vgl.1 675A | Vgl.2 675B | Bsp.1 675C | Bsp.2 675D | Bsp.3 592D |
|---|---|---|---|---|---|---|
| Komponente A1 | [%] | 99,5 | -- | 97,5 | 96,5 | 98,5 |
| Komponente A2 | [%] | -- | 99,5 | -- | -- | -- |
| Komponente B1 | [%] | -- | -- | 2,0 | 3,0 | -- |
| Komponente B2 | [%] | -- | -- | -- | -- | 1,0 |
| Additive | [%] | 0,5 | 0,5 | 0,5 | 0,5 | 0,5 |
| MVR bei 260°C/ 2,16 kg | [$cm^3$/ 10min] | 60 | 119 | 112 | 122 | >130[1)] |
| Schmelzeviskosität ($1000s^{-1}$) | [Pas] | 105 | 65 | 62 | 56 | 49 |
| Izod-Schlagzähigkeit | [$KJ/m^2$] | 116 | 81 | 97 | 87 | 93 |
| Zugmodul | [MPa] | 2640 | 2710 | 2590 | 2520 | 2760 |
| Reißdehndung | [%] | 15 | 4 | 19 | 21 | 14 |

1) zu niederviskos für Messapparatur

* Im Ansatz wurden 10 Gew.-% der Komponente A1) als Pulver eingesetzt, damit die Additive besser dosiert werden können, die restliche Menge wurde als Granulat eingesetzt.

** Komponente A1) wurde als Pulver eingesetzt, damit die Additive besser dosiert werden können

Tabelle 2

| | | Vgl.3 726A | Vgl.4 726H | Bsp.4 726D | Bsp.5 726E |
|---|---|---|---|---|---|
| Komponente A2 | [%] | 99,5 | -- | 96,5 | 95,5 |
| Komponente A3 | [%] | -- | 99,5 | -- | -- |
| Komponente B 1 | [%] | -- | -- | 3 | 4 |
| Additive | [%] | 0,5 | 0,5 | 0,5 | 0,5 |
| MVR bei 260°C/ 2,16 kg | [$cm^3$/10min] | 114 | 179 | 166 | 177 |
| Schmelzeviskosität ($1000s^{-1}$) | [Pas] | 67 | 43 | 48 | 41 |
| Izod-Schlagzähigkeit | [$KJ/m^2$] | 88 | 28 | 59 | 38 |
| Zugmodul | [MPa] | 2800 | 2850 | 2630 | 2570 |
| Reißdehnung | [%] | 7,7 | 2,8 | 8,7 | 6,3 |

Tabelle 3

| | | Vgl.5 3060A | Vgl.6 3060B | Bsp.6 3061B | Bsp.7 3061C |
|---|---|---|---|---|---|
| Komponente A4 | [%] | 69,5 | -- | 68,0 | 66,5 |
| Komponente A5 | [%] | -- | 69,5 | -- | -- |
| Komponente B3 | [%] | -- | -- | 1,5 | 3 |
| Komponente C2 | [%] | 30 | 30 | 30 | 30 |
| Additive | [%] | 0,5 | 0,5 | 0,5 | 0,5 |
| MVR bei 260°C/ 5,0 kg | [$cm^3$/10min] | 24 | 49 | 166 | 177 |
| Schmelzeviskosität (1500 $s^{-1}$) | [Pas] | 185 | 134 | 154 | 131 |
| Izod-Schlagzähigkeit | [$KJ/m^2$] | 62 | 47 | 58 | 54 |
| Zugmodul | [MPa] | 9730 | 9900 | 9810 | 9370 |
| Reißdehnung | [%] | 3,3 | 2,8 | 3,3 | 3,4 |

Tabelle 4

| | | Vgl.5 267A | Vgl.6 2919B | Bsp.8 267B | Bsp.9 267C |
|---|---|---|---|---|---|
| Komponente A5 | [%] | 69,5 | -- | 68,5 | 67,5 |
| Komponente A6 | [%] | -- | 69,5 | -- | -- |
| Komponente B2 | [%] | -- | -- | 1,0 | 2,0 |
| Komponente C2 | [%] | 30,0 | 30,0 | 30,0 | 30,0 |
| Additive | [%] | 0,5 | 0,5 | 0,5 | 0,5 |
| MVR bei 260°C/ 5,0 kg | [$cm^3$/10min] | 46 | 116 | 66 | * |
| Schmelzeviskosität (1000 $s^{-1}$) | [Pas] | 163 | 95 | 124 | 89 |
| Izod-Schlagzähigkeit | [$KJ/m^2$] | 56 | 37 | 46 | 41 |
| Zugmodul | [MPa] | 9510 | 9920 | 9100 | 9100 |
| Reißdehnung | [%] | 3,4 | 2,5 | 3,3 | 3,5 |

* nicht messbar, d.h. >120

Tabelle 5:

| | | Vgl.7 747A | Vgl.8 747G | Bsp.10 747C |
|---|---|---|---|---|
| Komponente A1 | [%] | 79,5* | 10,0** | 77,0 |
| Komponente A2 | [%] | -- | 69,5 | -- |
| Komponente C1 | [%] | 20,0 | 20,0 | 20,0 |
| Komponente B1 | [%] | -- | -- | 2,5 |
| Additive | [%] | 0,5 | 0,5 | 0,5 |
| MVR bei 260°C/ 2,16 kg | [$cm^3$/10min) | 25 | 38 | 38 |
| Schmelzeviskosität ($1000s^{-1}$) | [Pas] | 200 | 120 | 117 |
| Izod-Schlagzähigkeit | [$KJ/m^2$] | 38 | 30 | 32 |
| Biegemodul | [MPa] | 6430 | 6530 | 6490 |
| Reißdehndung | [%] | 4,1 | 3,8 | 3,2 |

* Im Ansatz wurden 10 Gew.-% der Komponente A1) als Pulver eingesetzt, damit die Additive besser dosiert werden können, die restliche Menge wurde als Granulat eingesetzt.

** Komponente A1) wurde als Pulver eingesetzt, damit die Additive besser dosiert werden können

**Patentansprüche**

**1.** Verwendung von terminal-polyfunktionellen polymeren Verbindungen (B), aus der Gruppe der Polyester, Polyglycerole oder Polyether zur Erniedrigung der Schmelzeviskosität in thermoplastischen Polykondensaten.

**2.** Verwendung gemäß Anspruch 1, wobei das thermoplastische Polykondensat ausgewählt ist aus Polybutylenterephthalat, Polyethylenterephthalat, Polyamid, Polycarbonat und Blends aus diesen Produkten.

**3.** Verwendung gemäß einem oder mehreren der vorangegangenen Ansprüche, wobei Polyglycerole als Komponente B verwendet wird.

**4.** Verwendung gemäß einem oder mehren der vorangegangenen Ansprüche wobei hochverzweigte oder dentritische Polyester als Komponente B verwendet werden.

**5.** Verwendung von 0,1 bis 10, vorzugsweise 0,25 bis 6, besonders bevorzugt 0,5 bis 4 Gew.-Teile mindestens einer terminal-polyfunktionellen polymeren Verbindung aus der Gruppe der Polyester, Polyglycerole oder Polyether, bevorzugt hochverzweigter, dentritischer Polyester, Polyglycerole oder Polyether die bevorzugt auf nicht aromatischen Monomeren im Kern der Verbindung basieren, zur Erniedrigung der Schmelzeviskosität in Zusammensetzungen enthaltend

A) 99,9 bis 10, bevorzugt 99,5 bis 40, bevorzugter 99,0 bis 55 Gew.-Teile mindestens eines thermoplastischen Polykondensates,
und

C) 0 bis 70 Gew.-Teile, vorzugsweise 5 bis 40 Gew.-Teile, besonders bevorzugt 9 bis 37 Gew.-Teile mindestens eines Füll- und Verstärkungsstoffen,

D) 0 bis 30 Gew.-Teile, vorzugsweise 5 bis 25 Gew.-Teile, besonders bevorzugt 9 bis 19 Gew.-Teile mindestens eines Flammschutzadditivs,

E) 0 bis 80 Gew.-Teile, besonders bevorzugt 2 bis 19 Gew.-Teile, am meisten bevorzugt 9 bis 15 Gew.-Teile mindestens eines Elastomermodifikators,

F) 0 bis 10 Gew.-Teile, bevorzugt 0,05 bis 3 Gew.-Teile, besonders bevorzugt 0,1 bis 0,9 Gew.-Teile weiterer üblicher Additive,

wobei die Summe aller Gewichtsteile 100 ergibt.

**6.** Verwendung gemäß einem oder mehren der vorangegangenen Ansprüche für Anwendungen der Dünnwandtechnologie, bei der die Formteile Wanddicken von weniger als 2,5 mm, bevorzugt weniger als 2,0 mm, besonders bevorzugt weniger als 1,5 mm und am meisten bevorzugt - weniger als 1,0 mm aufweisen.

**7.** Verwendung gemäß einem oder mehren der vorangegangenen Ansprüche für Verarbeitung auf Multiwerkzeuge, bei denen über ein Angusssystem mindestens 4 Formteile, bevorzugt mindestens 8 Formteile, besonders bevorzugt mindestens 12 Formteile, am meisten bevorzugt mindestens 16 Formteile in einem Spritzgussvorgang gefüllt werden.

Europäisches Patentamt

# EUROPÄISCHER RECHERCHENBERICHT

Nummer der Anmeldung
EP 03 02 6583

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| P,X | WO 03 078526 A (GEN ELECTRIC) 25. September 2003 (2003-09-25) * Absatz [0001]; Beispiele 1-20 * --- | 1,2,4-7 | C08L67/02 C08L77/02 C08L101/00 |
| P,X | WO 03 004546 A (MANSON JAN-ANDERS E ;BORER CAMILLE (CH); BUEHLER AG (CH); LETERRIE) 16. Januar 2003 (2003-01-16) * Beispiele 1-10 * --- | 1,2,4-7 | |
| X | WO 01 74946 A (GEN ELECTRIC) 11. Oktober 2001 (2001-10-11) * Seite 9, Zeile 11-20 * --- | 1,2,4-7 | |
| X | EP 1 099 727 A (BASF AG) 16. Mai 2001 (2001-05-16) * Tabelle 8 * --- | 1,2,4-7 | |
| X | EP 0 994 155 A (IDEMITSU PETROCHEMICAL CO) 19. April 2000 (2000-04-19) * Tabelle 1 * --- | 1-3,5-7 | RECHERCHIERTE SACHGEBIETE (Int.Cl.7) |
| X | JANG J ET AL: "CRYSTALLIZATION BEHAVIOR OF POLY(ETHYLENE TEREPHTHALATE) BLENDED WITH HYPERBRANCHED POLYMERS: THE EFFECT OF TERMINAL GROUPS AND COMPOSITION OF HYPERBRANCHED POLYMERS" MACROMOLECULES, AMERICAN CHEMICAL SOCIETY, EASTON, PA, US, Bd. 33, Nr. 33, 2000, Seiten 1864-1870, XP001079109 ISSN: 0024-9297 * Abbildung 14 * ----- | 1,2,4-7 | C08L |

Der vorliegende Recherchenbericht wurde für alle Patentansprüche erstellt

| Recherchenort | Abschlußdatum der Recherche | Prüfer |
|---|---|---|
| MÜNCHEN | 26. Februar 2004 | Lanz, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 02 6583

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2004

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 03078526 | A | 25-09-2003 | US | 2003171503 | A1 | 11-09-2003 |
| | | | WO | 03078526 | A1 | 25-09-2003 |
| WO 03004546 | A | 16-01-2003 | DE | 10132928 | A1 | 16-01-2003 |
| | | | WO | 03004546 | A1 | 16-01-2003 |
| WO 0174946 | A | 11-10-2001 | US | 6497959 | B1 | 24-12-2002 |
| | | | EP | 1274799 | A1 | 15-01-2003 |
| | | | JP | 2003529658 | T | 07-10-2003 |
| | | | WO | 0174946 | A1 | 11-10-2001 |
| | | | US | 2003082384 | A1 | 01-05-2003 |
| EP 1099727 | A | 16-05-2001 | DE | 19953950 | A1 | 10-05-2001 |
| | | | EP | 1099727 | A2 | 16-05-2001 |
| EP 0994155 | A | 19-04-2000 | JP | 2000103951 | A | 11-04-2000 |
| | | | DE | 69914277 | D1 | 26-02-2004 |
| | | | EP | 0994155 | A2 | 19-04-2000 |
| | | | KR | 2000023490 | A | 25-04-2000 |
| | | | TW | 503248 | B | 21-09-2002 |
| | | | US | 6331584 | B1 | 18-12-2001 |

EPO FORM P0461

Für nähere Einzelheiten zu diesem Anhang : siehe Amtsblatt des Europäischen Patentamts, Nr.12/82